# EUROPEAN PATENT APPLICATION

(11) **EP 4 664 991 A1**
(43) Date of publication of application: **17.12.2025**
(21) Application number: 23892786.7
(22) Date of filing: 21.12.2023
(51) Int. Cl.: H04W 36/00, H04L 61/4511, H04W 84/04

(54) **MANAGEMENT METHOD OF EASDF**

(30) Priority: 10.02.2023 US 202363444569 P
(71) Applicant: LG ELECTRONICS, INC., Seoul 07336 (KR)
(72) Inventor: KIM, Hongsuk, Seoul 06772 (KR); YOUN, Myungjune, Seoul 06772 (KR)
(74) Representative: Maikowski & Ninnemann Patentanwälte Partnerschaft mbB
(86) International application number: PCT/KR2023/021269
(87) International publication number: WO 2024/167135

(57) **Abstract**

One disclosure of the present disclosure provides a method by which V-SMF performs communication. The method comprises the steps of: wherein a handover of a V-SMF for a UE (User Equipment) is performed from a source V-SMF to the target V-SMF, receiving, from the source V-SMF, a context related to session for the UE, based on the handover; selecting a new V-EASDF (V-Edge Application Server Discovery Function), based on a PLMN (Public Land Mobile Network selection) of the target V-SMF being different from a PLMN of the source V-SMF.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DESCLOSURE

### TECHNICAL PROBLEM

When the V-SMF is changed in a roaming scenario, the issue is whether to reuse the V-EASDF selected by the previous V-SMF or to select a new one, and how to handle the selection.

### TECHNICAL SOLUTION

If the V-SMF decides to select a new EASDF, the changed V-SMF may notify the old V-SMF. If the V-SMF decides to reuse an existing EASDF, the changed V-SMF may update the context of the EASDF.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIG. 5 illustrates an example 5G system structure to which an implementation of the present specification may be applied.
FIG. 6 shows an EAS re-discovery procedure according to the first disclosure of the present specification.
FIGS. 7a to 7c shows UE mobility procedures according to the disclosure of the present specification.
FIG. 8 shows the procedure of the target V-SMF according to disclosure of the present specification.
FIG. 9 shows the procedure of the source V-SMF according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

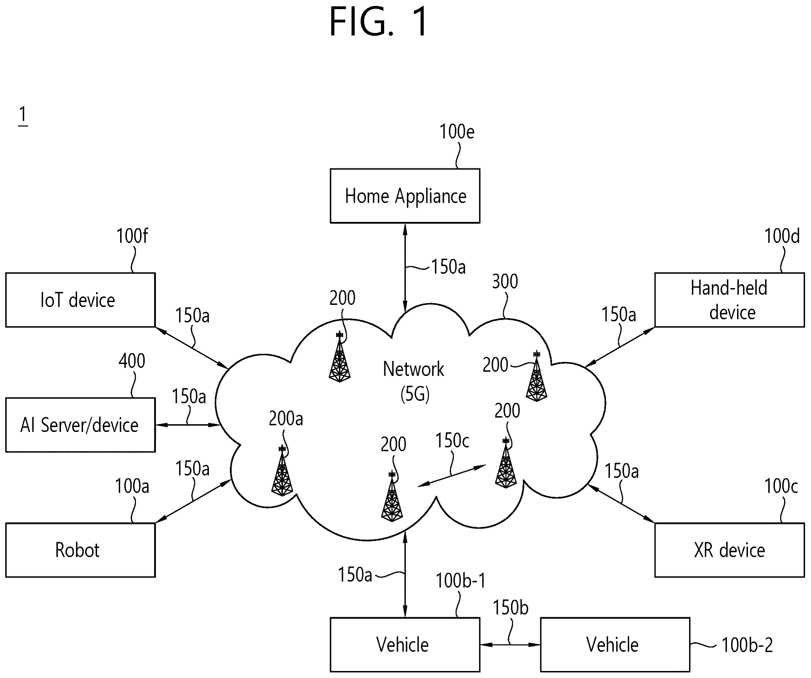

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

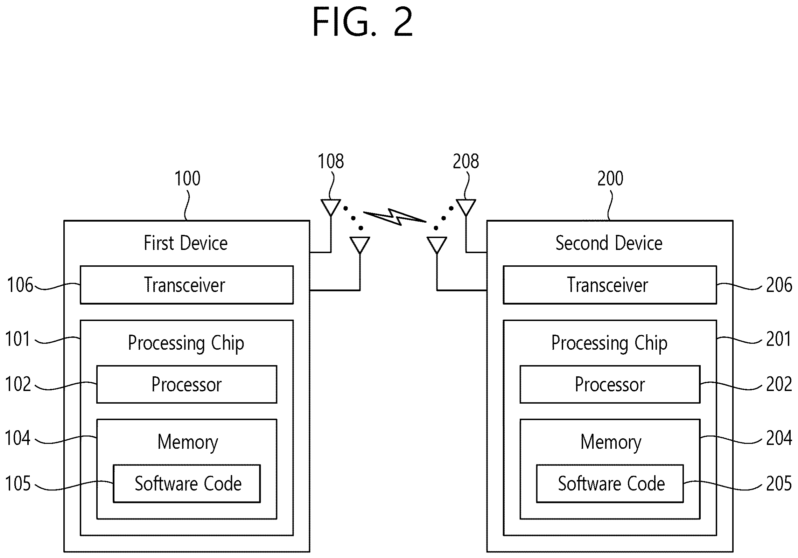

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

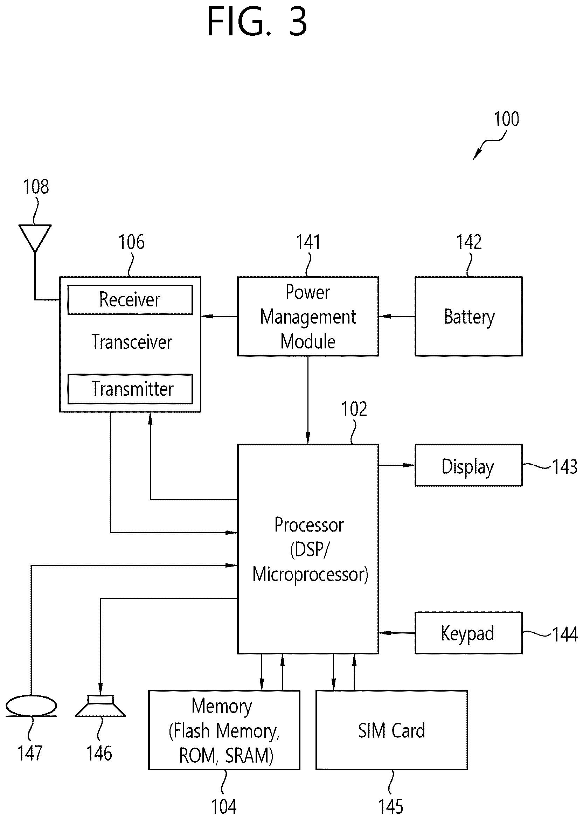

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

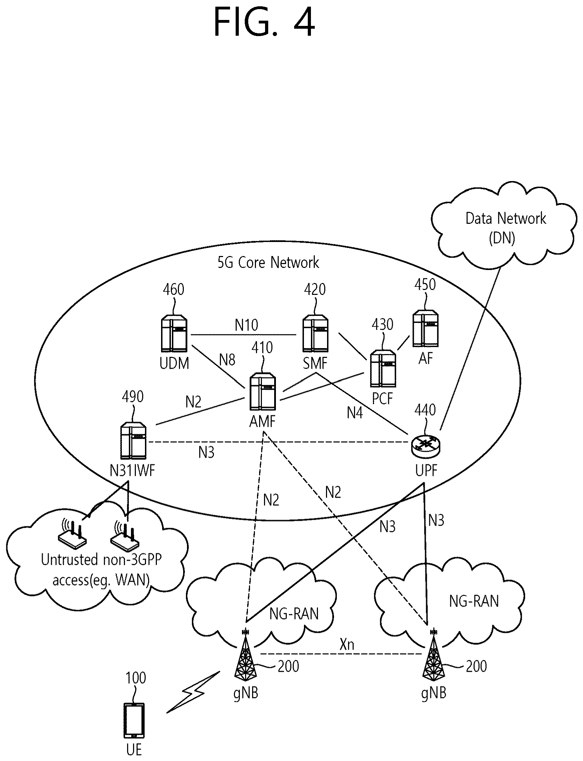

**FIG. 4** **is a block diagram of a next generation cellular network.**

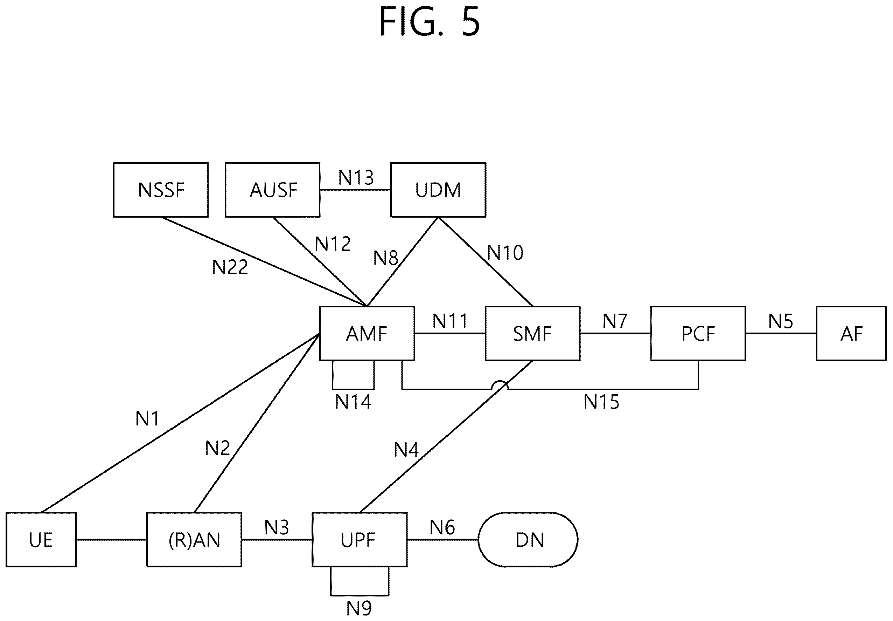

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

**FIG. 5** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Edge Computing>

Edge computing is a distributed computing paradigm that brings computation and data storage to where it is needed to improve response times and conserve bandwidth.

The growth of IoT devices at the edge of the network generates significant amounts of computationally intensive data that is delivered to the data center, pushing network bandwidth requirements to the limit. Despite improvements in network technology, data centers cannot guarantee acceptable transfer rates and response times, which are critical requirements for many applications. Furthermore, edge devices are steadily consuming data from the cloud, forcing enterprises to create content delivery networks to decentralize data and service provisioning. The purpose of edge computing is to move computation away from the data center and toward the edge of the network, using smart objects, mobile phones, and network gateways to perform tasks and deliver services via the cloud. By moving services to the edge, it is possible to provide content caching, service delivery, storage, and IoT management, enabling faster response times and delivery speeds.

### <Accessing EHE in VPLMN when roaming>

There is a discussion on how to provide edge computing services to devices in roaming scenarios.

There are two scenarios. One is a UE accessing an Edge Hosting Environment (EHE) in a visited public land mobile network (VPLMN) via a Local Breakout (LBO) PDU session, and the other is a UE accessing an EHE in a VPLMN via a PDU session set to Home Routed (HR).

For scenarios using LBO PDU sessions, a possible solution should address the following
- how to establish the LBO PDU Session towards the correct S-NSSAI/DNN pair in order to access an EHE in the VPLMN.
- how to support Rel-17 edge computing related procedures, such as EAS (re-)discovery.

For the scenario using a PDU Session with a PSA (PDU Session Anchor) in the HPLMN, potential solutions should address the following:
- how to authorize the PDU Session to support local traffic routing to access an EHE in the VPLMN;
- whether and how to support charging for the local traffic of a PDU Session that supports local traffic routing to access an EHE in the VPLMN;
- How to support Rel-17 edge computing related procedures such as EAS (re)discovery.
- how to ensure proper policy control and QoS enforcement;
- potential impact on Policy and QoS control;
- how to configure the VPLMN ECS address to UE in roaming scenarios;
- how to support the edge relocation in roaming scenarios.

NOTE 1: Interaction with SA5 is expected regarding charging aspects where needed.

NOTE 2: Latency needs to be considered and addressed for all scenarios.

NOTE 3: In Rel-17, the ECS address is provided by UDM, which requires further consideration in scenarios with ECS in a VPLMN.

For a roaming UE, accessing to EHE in VPLMN might be needed to fulfil use cases requiring edge computing. Two main scenarios should be considered:
1) UE accessing V-EHE via a Local Breakout (LBO) PDU Session:
   The scenario supports all connectivity models and assumes that an LBO PDU Session is used to access an EHE in VPLMN for EC applications.
   With a LBO PDU Session, the UE can access an EHE in VPLMN.
   NOTE 1: Two different PDU Sessions are required to access an EHE in VPLMN and Home DN in HPLMN simultaneously.
2) UE accessing V-EHE via a Home Routed (HR) PDU Session (i.e. with PSA in HPLMN):
   This scenario assumes the session breakout for the HR PDU Session is used to access EHE in VPLMN for EC application.
   With a single PDU Session, UE can access an EHE in VPLMN and also the DN in HPLMN.
   NOTE 2: With a single PDU Session and (DNN+S-NSSAI), it can support both EC and non-EC applications in either roaming or non-roaming case.
   To support such PDU Session, it needs to be studied how the UE can access the V-EHE via a HR PDU Session. Two sub-scenarios may be considered:
2.1) HPLMN has the knowledge of EAS deployment information in VPLMN for specific services. The HPLMN triggers EAS discovery and local traffic routing in VPLMN.
2.2) HPLMN does not have the knowledge of EAS deployment information in VPLMN. The VPLMN triggers EAS discovery and local traffic routing in VPLMN.

As agreed in SA2#154 meeting for this agenda item, the results of the work on techniques to support EAS (re)-discovery in home routed roaming scenarios are presented and discussed.

### <Accessing EHE via HR PDU session>

### 1. Authorization

AMF can get SMF Selection Subscription data with indication for HR-local traffic routing allowed during registration procedure, in order to help AMF select the proper SMF. V-SMF sends the HR PDU session establishment request to H-SMF, H-SMF authorizes the local traffic routing request for this PDU Session based on subscription data and provides HR-local traffic offloading authorization information (e.g. allowed FQDN ranges) to V-SMF. The V-SMF configures V-EASDF taking into account this authorization information.

After authorizing the local traffic routing in VPLMN, the H-SMF sends VPLMN-specific roaming offload policy including traffic description information, e.g. FQDN range, EAS IP range and the session-related policy to the V-SMF if configured in HPLMN based on the service level agreement between VPLMN and HPLMN.

### 2. Charging

NOTE 1: It will be described how V-SMF supports charging for the local traffic of a PDU Session that supports local traffic routing to access an EHE in the VPLMN and whether it reports to V-CHF as well as to H-SMF in coordination with SA5 during normative phase.

### 3. EAS discovery

V-SMF decides UL-CL/BP and local UPF insertion based on V-EASDF notification and UE location. The V-SMF interacts with the H-SMF for UL CL/BP and local UPF insertion by replacing I-SMF with V-SMF and SMF with H-SMF.

The V-SMF establishes the V-EASDF based on the H-SMF's roaming offload policy and the AF's EAS placement information placed in the VPLMN via the V-NEF and/or the V-SMF's local settings and the HPLMN's DNS server address received from the HPLMN.

The V-SMF sends the V-EASDF address to the H-SMF so that the H-SMF can generate a PCO for the UE during the PDU session establishment/modification procedure.

### 4. EAS (re)discovery:

For UE mobility triggered EAS rediscovery for both inter-PLMN and intra-PLMN:

The V-SMF uses the existing procedure by replacing the I-SMF with the V-SMF and the SMF with the H-SMF to transmit the target DNAI (if available) , with the difference that V-SMF may optionally send also the impact field and optionally target V-EASDF to the H-SMF.

The H-SMF triggers the PDU session modification procedure to send the EAS rediscovery indication, optionally the impact field and optionally the V-EASDF to the UE.

For AF triggered EAS rediscovery for AFs interacting with HPLMN:

The AF deployed in VPLMN acting as 3rd party AF interacts with H-SMF via H-NEF and provides the target DNAI to the H-SMF.

The H-SMF sends target DNAI information including the target DNAI to the V-SMF that relays this information to the AMF, and the AMF uses the target DNAI to select a target V-SMF by replacing I-SMF with V-SMF, SMF with H-SMF.

The target V-SMF selects target V-EASDF based on the target DNAI and initiates PDU Session Modification procedure to trigger EAS re-discovery.

NOTE 2: The baseline procedure for AF triggered EAS Re-discovery for an AF interacting with VPLMN will be determined in normative phase.

5. For edge relocation in roaming scenarios, the AF sends PLMN ID corresponding to target EAS to the network, and an inter-PLMN relocation indicator is transferred between V-SMF and H-SMF to indicate that the EAS relocation is between HPLMN and VPLMN.

In the above described results, it was specified that the EAS (re)-discovery procedure can be performed from the mobility and AF of the terminal in a home routed roaming scenario. It was agreed to include both Inter-PLMN handover and Intra-PLMN handover cases.

In a conventional roaming scenario, the Inter-PLMN handover procedure describes the standard service procedure according to the following cases: case of V-SMF insertion from the AMF/Target AMF depending on the movement between HPLMN and VPLMN of the terminal, case of V-SMF instance change by selecting a new V-SMF and case of involving V-SMF removal resulting in non-roaming sessions.

In addition, the Edge Application Server Discovery Function (EASDF) is a Network Function (NF) that performs the role of DNS server/resolver to support the EAS discovery procedure of the terminal. To support edge computing in roaming scenarios, a V-EASDF instance deployed within the VPLMN may be selected from the V-SMF.

Since the V-SMF may be inserted/changed/deleted during the conventional Inter PLMN and Intra PLMN handover procedures, the selection/change process for the V-EASDF and the EASDF instances within the HPLMN may also be involved. This may require the creation/deletion of Domain Name System (DNS) contexts within EASDF. It may also require notifying the EASDF of the new/changed target SMFs to report on the receipt of DNS messages from the terminal.

Therefore, a V-EASDF support method and a DNS context management method in the Inter PLMN and Intra PLMN handover process may be proposed in this specification to support EAS (Re-)discovery due to UE mobility in the above roaming scenarios.

A method for supporting EAS Re-discovery in a roaming scenario involving Inter PLMN/Intra PLMN handovers may comprise a combination of one or more of the following behaviors/configurations/steps.

For the purpose of supporting edge computing, this specification assumes that the SMF of the HPLMN performs an authorization procedure for the use of EASDF through the UE authorization for EAS discovery via EASDF information in the Session Management Subscription data of the subscriber information of the UE.

In the roaming scenario, it is assumed that the local V-EASDF in the selected V-SMF in the serving PLMN is selected during the home-routed session breakout (HR-SBO) PDU session establishment of the terminal, and the newly selected local V-EASDF address is provided to the terminal via PCO.

In the scenario where a roaming terminal becomes non-roaming after an inter-PLMN handover to the HPLMN, it may be assumed that the HPLMN becomes the serving network, the EASDF in the H-SMF is selected, and the newly selected H-EASDF address is provided to the terminal via PCO.

V-SMFs may be inserted/changed/deleted during intra PLMN handover within the home/serving PLMN of the terminal. V-SMFs may be inserted/changed/deleted during inter-PLMN handover from the HPLMN to the serving PLMN. V-SMFs may be inserted/changed/deleted during inter-PLMN handover from the serving PLMN to the HPLMN.

Accordingly, a method for managing the DNS context of the V-EASDF/H-EASDF may be proposed to support EAS re-discovery in roaming scenarios, and a method of setting the EASDF report target SMF for DNS message reception may be proposed.

The procedures and/or messages in this specification may use conventional procedures/messages. Alternatively, the procedures and/or messages described herein may be extensions of existing procedures/messages. Alternatively, the procedures and/or messages herein may be new procedures/messages defined and used.

User Equipment (UE) and terminal may be described interchangeably in this specification.

The present specification is focused on proposals. For details of PDU Session for supporting HR-SBO in VPLMN related behavior and procedures and EASDF functionality, basically TS 23.548 V18.0.0 (2021.09.24) can be referred to. The methods presented herein may be performed or used combinatorially or complementarily.

### 1. First disclosure: Method for supporting EAS re-discovery due to UE mobility with SMF changes in roaming scenarios

During the Intra/Inter PLMN handover procedure, the V-SMF may change from the existing old V-SMF (source V-SMF) to the target V-SMF. Previously, the source V-SMF selected the old V-EASDF instance, and the old V-EASDF was operated accordingly.

The changed V-SMF (target V-SMF) may select the new V-EASDF instance instead of the old V-EASDF instance. The changed V-SMF (target V-SMF) may also set a new DNS context and DNS message handling rules. Since the new V-SMF has selected a new V-EASDF, it is necessary to support the new V-SMF to delete the DNS context in the old V-EADSF through the old V-SMF.

The EAS re-discovery procedure will be described.

In VPLMN, the EAS re-discovery procedure may be triggered by UE mobility. Alternatively, it may be triggered by a request from the AMF.

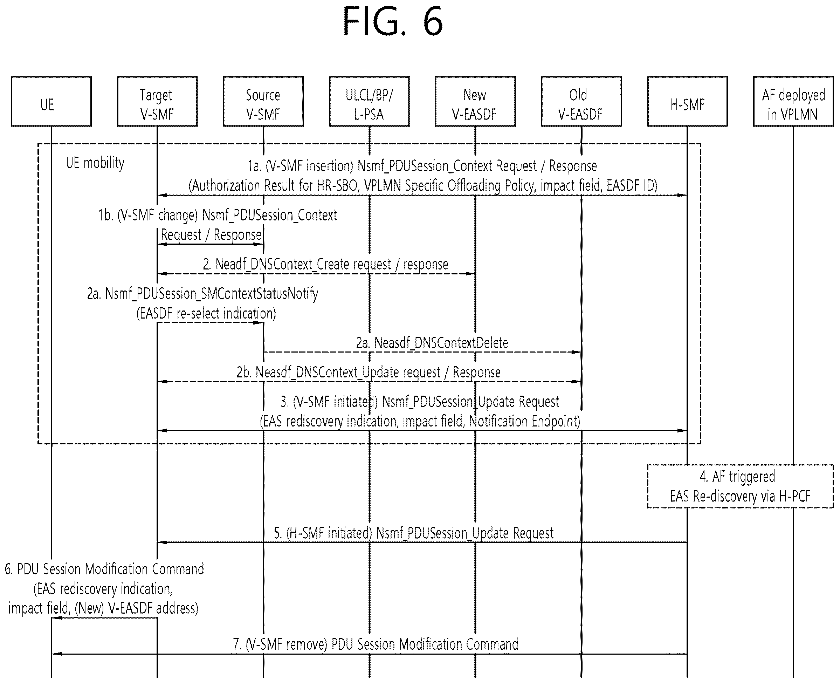

**FIG. 6** **shows an EAS re-discovery procedure according to the first disclosure of the present specification.**

FIG. 6 shows the EAS re-discovery procedure in a VPLMN for HR roaming.
1. For UE mobility triggered EAS EAS re-discovery, step 4 may be skipped.
1a. (For V-SMF insertion) The (target) V-SMF may retrieve the SM context from the H-SMF using Nsmf_PDUSession_Context Request/Response (SM Context retrieval between SMFs).
   HR PDU session may be established without V-SMF.
1b. (For V-SMF change) The target V-SMF may retrieve the SM context from the source V-SMF using Nsmf_PDUSession _Context Request/Response.(SM Context retrieval between SMFs)

The SM context in steps 1a and 1b may contain the authorization result for the Home Routed PDU Session for roaming (HR-SBO) and the VPLMN specific offloading policy.

If inserted by an H-SMF or source V-SMF, the SM context may also contain an impact field corresponding to the previous target Data Network Access Identifier (DNAI).

For V-SMF insertion or V-SMF change, when the AMF sends an Nsmf_PDUSession_CreateSMContext Request to the target V-SMF, the AMF may include an HR-SBO allow indication if received from the UDM.

If the UE is moving without changing the V-SMF, step 1 may be skipped.

If the UE is moving with V-SMF removal, steps 1-6 may be skipped.

After the handover procedure, the (target) V-SMF may perform UL CL/BP and local PSA insertion/change/removal by replacing I-SMF with V-SMF and SMF and H-SMF. Differences are shown as steps 2 to 5.

NOTE 1: When there are other V-UPF(s) between UL CL/BP and H-UPF, then the (target) V-SMF may perform UL CL/BP and local PSA insertion/change/removal by replacing SMF with V-SMF and PSA1 with V-UPF.

The target V-SMF may decide whether to select a new V-EASDF or reuse an existing old V-EASDF.

If the target V-SMF decides to select a new V-EASDF, step 2 and step 2a described later may be performed.

If the target V-SMF decides to reuse an existing old V-EASDF, step 2b may be performed.

The PLMN of the target V-SMF may be different from the PLMN of the source V-SMF. If the target V-SMF knows that the PLMN of the target V-SMF and the PLMN of the source V-SMF are different, the target V-SMF may always select a new V-EASDF. In this case, the source V-SMF may send a message to the old V-EASDF to remove the old DNS context.

2. The (target) V-SMF may (re-)select a new V-EASDF, e.g. based on the DNAI corresponding to the target UE location. The (target) V-SMF may invoke Neasdf_DNSContext_Create service to obtain the new V-EASDF address or the (target) V-SMF obtains the new V-EASDF address based on local configuration.

2a. If the (target) V-SMF selects a new V-EASDF and decides not to use the old V-EASDF, then (target) V-SMF may inform the (source) V-SMF using Nsmf_PDUSession_SMContextStatusNotify service that it has selected the new V-EASDF and the old V-EASDF is not used any longer. Then, the (source) V-SMF may remove the DNS context in the old V-EASDF using Neasdf_DNSContext_Delete service.

The target V-SMF may send an Nsmf_PDUSession_SMContextStatusNotify to the source V-SMF. The Nsmf_ PDUSession_SMContextStatusNotify may contain an indication that the target V-SMF has selected a new V-EASDF and that the old V-EASDF is not used any longer.

The source V-SMF may send a Neasdf_DNSContext_Delete to the old V-EASDF. Neasdf_DNSContext_Delete may contain instructions that cause the old V-EASDF to remove its DNS context.

2b. Otherwise, i.e. if the existing V-EASDF is reused, the (target) V-SMF may update the Notification Endpoint towards the existing V-EASDF using Neasdf_DNSContext_Update service.

The target V-SMF may be reused by the old V-EASDF. In this case, the target V-SMF may send a Neasdf_DNSContext_Update to the old V-EASDF. The Neasdf_DNSContext_Update may contain instructions for the old V-EASDF to update Notification Endpoint.

V-SMF changes may occur during the Intra/Inter PLMN HO procedure. During the Intra/Inter PLMN HO procedure

The new (target) V-SMF may determine to select the new V-EASDF that is not old V-EASDF and DNS context. The DNAI or the like may include the location information of the terminal.

When the (target) V-SMF determines the selection of the new V-EASDF, the DNS context of the old V-EASDF may be invalid and no longer used. These DNS contexts of the old V-EASDF may cause resource wastage and malfunctions if they are not deleted/processed separately.

Based on the (target) V-SMF determining to select a new V-EASDF, the (target) V-SMF may include an EASDF Re-selection Indication in the Nsmf_ PDUSession_SMContextStatusNotify to inform the old V-SMF (source V-SMF) that the DNS context of the old V-EASDF is no longer valid.

After receiving the Nsmf_PDUSession_SMContextStatusNotify, the old V-SMF (source V-SMF) may delete the DNS context of the old V-EASDF through the Neasdf_DNSContext _Delete service.

Instead of the (target) V-SMF selecting a new V-EASDF, the new (target) V-SMF may decide to reuse the V-EASDF that was previously selected (or set up and used) by the old V-SMF.

If the (target) V-SMF decides to reuse the V-EASDF, the Notification Endpoint information for SMFs that are target which is reported on the receipt of DNS messages from V-EASDF may be updated. The Notification Endpoint information may include information about the SMFs to which the V-EASDF is required to report on the receipt of DNS messages from the terminal when the V-EASDF receives a DNS message from the terminal. That is, when the V-EASDF receives a DNS message from the terminal, the V-EASDF may report the receipt of the DNS message to the SMFs "to which the V-EASDF is required to report on the receipt of DNS messages ".

The existing Neasdf_DNSContext_Update service may be extended to update the Notification Endpoints for NF consumers that are subject to reporting within the EASDF.

The new (target) V-SMF may obtain information about the V-EASDF to which it will make the update request and the DNS Context ID of the EASDF during SM Context retrieval process between SMFs.

3. The (target) V-SMF may invoke Nsmf_PDUSession_Update Request (EAS rediscovery indication, impact field (i.e. old EAS information such as FQDN range and IP range corresponding to the old local part of DN) if available, the new V-EASDF address if available) to the H-SMF. The V-SMF may send Nsmf_PDUSession_Update Requestn to the H-SMF.

For the case of local PSA removal, the request message may be sent to the H-SMF without including any DNAI.

As the impact field is used to identify which EAS(s) information need to be refreshed, it is studied that the impact field corresponds to:
- the new target DNAI. For the case of local PSA insertion, impact field corresponding to the new target DNAI may be sent from the V-SMF to the H-SMF.
- the new target DNAI and old target DNAI. For the case of local PSA change, the (target) V-SMF may determine the impact field based on the new target DNAI and the impact field may correspond to the old target DNAI received in step 1.
- the old target DNAI. For the case of local PSA removal, only impact field corresponding to the old target DNAI received in step1 may be sent from the V-SMF to the H-SMF.

4. For AF deployed in VPLMN triggered EAS rediscovery, the AF may indicate the EAS rediscovery for the impacted applications, which are identified by Application Identifier(s), to the H-SMF via the H-PCF using the AF influence on traffic routing procedure.

5. (V-SMF insertion case) The H-SMF may initiate Nsmf_PDUSession_Update Request towards the (target) V-SMF including the PCO. The Nsmf_PDUSession_Update Request may include PCO (Protocol Configuration Options). The H-SMF may send Nsmf_PDUSession_Update Request to the V-SMF.

The PCO may include EAS rediscovery indication, optionally impact field and optionally V-EASDF address.

6. (V-SMF insertion case) The V-SMF may initiate PDU Session Modification command including the PCO to the UE. The V-SMF may send PDU Session Modification command including the PCO to the UE.

7. (V-SMF removal case) The H-SMF may select an EASDF in HPLMN and create a context for the PDU session in that EASDF and then initiate PDU Session Modification command including PCO to the UE. The H-SMF may send PDU Session Modification command to the UE.

The PCO may include EAS rediscovery indication and optionally the impact field.

It may be studied later whether the H-SMF selects an EASDF in HPLMN, the PCO also may include the new EASDF address.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

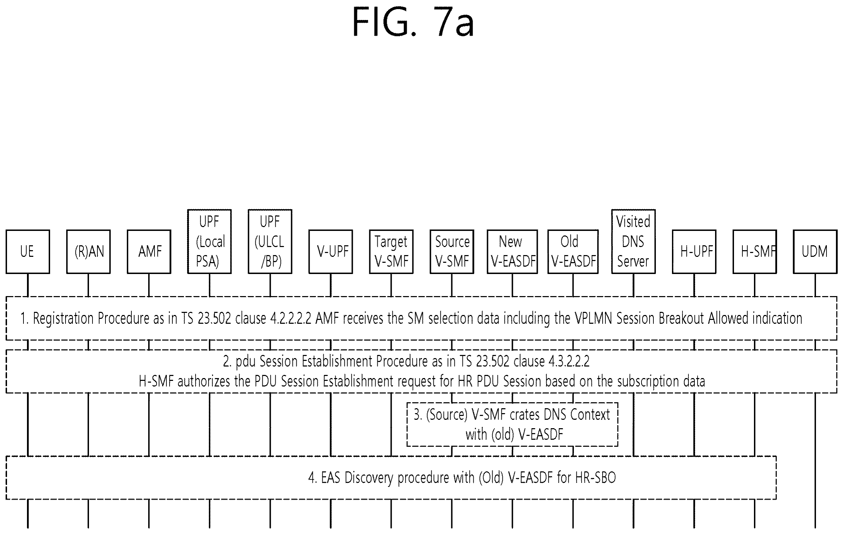

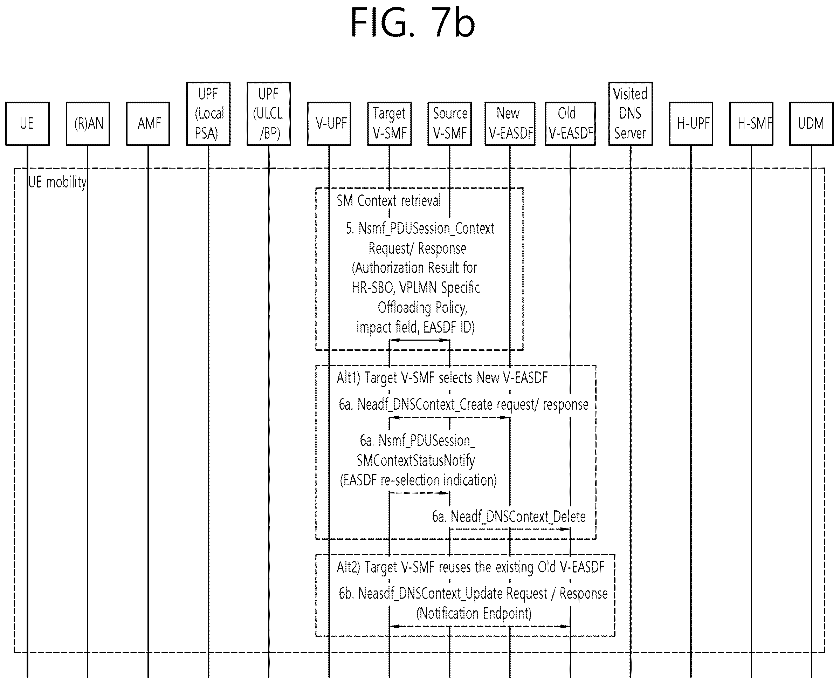

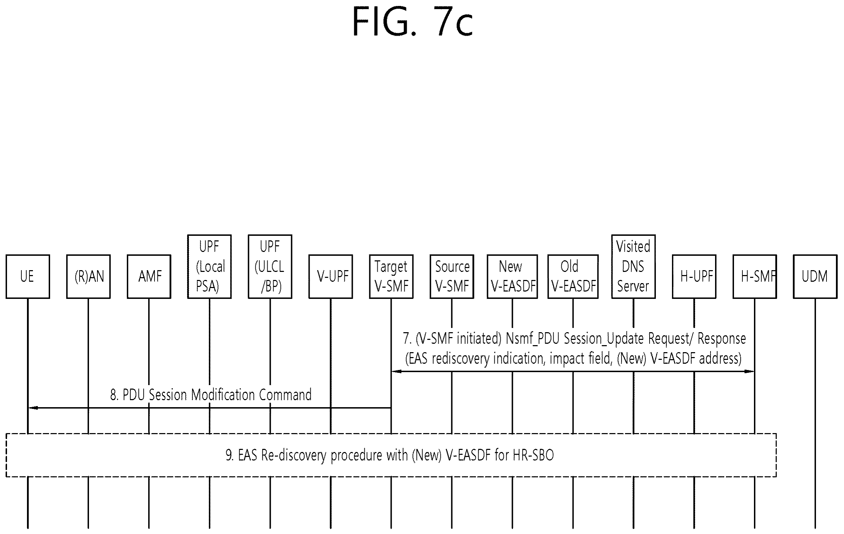

**FIGS. 7a to 7c** **shows UE mobility procedures according to the disclosure of the present specification.**

FIGS. 7a to 7c illustrate the procedure "UE mobility with V-SMF change triggered EAS Re-discovery with V-EASDF for HR-SBO".

1-4. Based on the registration process of the terminal and the subscriber information in steps 1 and 2, the HR PDU session establishment procedure may be performed. During the HR PDU session establishment process, the V-SMF may perform the V-EASDF discovery and selection process to support the terminal's EAS discovery process. In step 3, the V-SMF may create a DNS context. The terminal may then perform the EAS discovery procedure (step 4) and receive Edge Computing services based on the V-EASDF address information contained in the PDU session establishment accept message.

5-6. Steps 5-6 may be UE mobility procedures. The UE mobility procedure may be an Intra/Inter PLMN handover procedure due to the movement of the terminal. The Intra/Inter PLMN handover procedure may involve a change of the V-SMF. In the Intra/Inter PLMN handover procedure, the AMF may determine a change of V-SMF, and the newly selected V-SMF (hereinafter referred to as the target V-SMF) may perform a retrieval procedure to obtain the SM context from the existing V-SMF (hereinafter referred to as the source V-SMF). The SM context may include the EASDF's DNS context ID information and the registered EASDF ID from the source V-SMF. The EASDF ID may include information about an existing V-EASDSF that has been selected by the source V-SMF.

In Steps 5 and 6, contents about support to enable EAS re-discovery to be performed after the Intra/Inter PLMN handover procedure may be described.

The target V-SMF may decide whether to select a new V-EASDF or reuse an existing V-EASDF by considering the following information
- Whether an existing old V-EASDF instance is available within the service area.
- Data Network Access Identifier (DNAI) corresponding to UE location
- location information of the V-EASDF instances, etc.

The PLMN of the target V-SMF may be different from the PLMN of the source V-SMF. If the PLMN of the target V-SMF and the PLMN of the source V-SMF are different, the target V-SMF may always select a new V-EASDF. In this case, the target V-SMF may know that the PLMN of the target V-SMF and the PLMN of the source V-SMF are different.

6a. The target V-SMF may select a new V-EASDF instance. For example, if an existing old V-EASDF instance is not available within the service area of the target V-SMF/PSA UPF, the target V-SMF may select a new V-EASDF after the UE moves, taking into account the location information of the UE and the V-EASDF instances. The target V-SMF may receive the SM context from the source V-SMF, and the target V-SMF may select and establish a new local PSA UPF based on the SM context, and subsequently determine the selection of the New V-EASDF.

The target V-SMF may use the Nsmf_PDUSession_SMContextStatusNotify service to notify that it has decided to use the New V-EASDF. For example, the target V-SMF may include an EASDF Re-selection Indication in the Nsmf_PDUSession_SMContextStatusNotify and send it to the source V-SMF. The source V-SMF may then know that the target V-SMF has decided to use the New V-EASDF.

Based on the Nsmf_PDUSession_SMContextStatusNotify it receives, the source V-SMF may determine whether to maintain the DNS context in the existing V-EASDF. If the source V-SMF determines that it no longer needs to maintain it, it may perform the Neasdf_DNSContext _Delete service to delete the DNS context. The source V-SMF may send Neasdf_DNSContext _Delete to the old EASDF to have it delete the DNS context.

If the target V-SMF does not have connectivity to the old EASDF, it may use Nsmf_PDUSession_SMContextStatusNotify to request that the source V-SMF delete the DNS context of the EASDF. For example, the target V-SMF may include an indication that it is requesting to delete the EASDF or an indication that a new EASDF has been selected in the Nsmf_PDUSession_SMContextStatusNotify. The source V-SMF may then perform the Neasdf_DNSContext_Delete service operation to delete the DNS context of the old EASDF.

Alternatively, based on the EASDF ID and the DNS context ID of the EASDF received from the source V-SMF, the target V-SMF may perform a Neasdf_DNSContext_Delete directly to the old EASDF. That is, the target V-SMF may send a Neasdf_DNSContext_Delete directly to the old EASDF. In this case, the target V-SMF may use Nsmf_PDUSession_SMContextStatusNotify to notify the source V-SMF that the DNS context of the EASDF has been deleted.

The source V-SMF may know that the target V-SMF will not use the existing V-EASDF.

For example, if the PLMN changes since a PLMN of the source V-SMF and a PLMN of target V-SMF have different, the existing V-EASDF may not be able to be used. In this case, the source V-SMF may know that the target V-SMF will not use the existing V-EASDF.

For example, if a V-SMF is created when going from non-roaming to home routed roaming or from home routed roaming to non-roaming, the existing V-EASDF may not be available. In this case, the source V-SMF may know that the target V-SMF will not use the existing V-EASDF.

If the source V-SMF knows that the target V-SMF will not use the existing V-EASDF (if the PLMN of the target V-SMF is different from the PLMN of the source V-SMF), the source V-SMF may not send context related to the EASDF to the target V-SMF. In this case, the source V-SMF may delete the DNS context of the EASDF in the V-EASDF while deleting the associated SM context when it receives the Nsmf_PDUSession_ReleaseSMContext Request from the AMF. In other words, the source V-SMF may delete the existing DNS context of the V-EASDF based on the receipt of the Nsmf_ PDUSession_ReleaseSMContext Request from the AMF.

The source V-SMF may delete the DNS context of the old V-EASDF using Neasdf_DNSContext_Delete immediately after receiving an Nsmf_PDUSession_SMContextStatusNotify from the target V-SMF. Alternatively, the source V-SMF may delete the DNS Context of the V-EASDF's EASDF by deleting the associated SM Context when it receives an Nsmf_PDUSession_SMContextStatusNotify from the target V-SMF and subsequently receives an Nsmf_PDUSession_ReleaseSMContext Request from the AMF.

6b. The target V-SMF may reuse the Old EASDF that was previously selected/set by the source V-SMF. The target V-SMF may decide to reuse the Old EASDF after the terminal moves by considering the location information of the V-EASDF instances, etc.

The target V-SMF may request to update the DNS context by sending a Neasdf_DNSContext_Update request to the old V-EASDF.

The target V-SMF may send an indication to the source V-SMF that it has decided to reuse the EASDF. Based on the indication, the source V-SMF may determine if it needs to maintain the DNS context in the existing V-EASDF.

If the target V-SMF reuses an existing V-EASDF, the target V-SMF may obtain, from the source V-SMF, an SM context that includes the EASDF ID and the DNS context ID information of the EASDF. The target V-SMF may then identify the V-EASDF by the EASDF ID and the DNS context ID information of the EASDF, and update the Notification Endpoint in the V-EASDF. If necessary, the target V-SMF may also instruct to update DNS message handling rules.

Instead of sending a Neasdf_DNSContext_Update request to the existing V-EASDF, sending an Nsmf_PDUSession_SMContextStatusNotify to the source V-SMF, the target V-SMF may send indication that requests to update the Notification Endpoint. The source V-SMF may then take action to update the Notification Endpoint with V-EASDF. The target V-SMF may assign a Notification Endpoint to receive notifications from the V-EASDF and include it in the Nsmf_PDUSession_SMContextStatusNotify.

Steps 6a and 6b may be based on the information referenced in clause 6.3.23 of TS23.501 V17.0 (2022.12.21) for the EASDF discovery and selection process from the existing SMF.

7-8. The following information may be sent from the target V-SMF to the H-SMF to enable the terminal to trigger the EAS re-discovery procedure
- EAS re-discovery indication
- Impact field
- If a new V-EASDF instance has been selected, the address information of that V-EASDF.

The target V-SMF may include the above information in a PCO of the PDU Session Modification Command and send it to the terminal.

The terminal may store the destination information of application-specific DNS messages in its DNS cache. The terminal may send application traffic based on the destination information.

The terminal may refresh/update the aforementioned DNS cache information by referring to the corresponding EAS Rediscovery indication and impact field.

The terminal may send DNS messages to the V-EASDF for EAS re-discovery (finding the address of a new EAS) based on the V-EASDF address information.

The disclosure of this specification is intended to support EAS re-discovery from Intra/Inter PLMN handover procedures, including V-SMF changes in roaming scenarios.

Furthermore, if the new (target) V-SMF selects a new V-EASDF and decides to create DNS contexts, in the disclosure of this specification, the source V-SMF may be informed the decision, so that deletion/processing of no longer valid DNS context resources within the old V-EASDF can be performed. The disclosure of this specification may also prevent malfunctions in the processing of DNS messages.

Furthermore, the disclosure proposes to enable a target V-SMF to reuse existing V-EASDF.

The method according to the disclosure of this specification may extend and reuse the existing Nsmf_PDUSession_SMContextStatusNotify and Neasdf_DNSContext_Delete service operations. Alternatively, new service operations may be defined and used.

As to UE mobility, the disclosure of this specification may enable to avoid using a DNS context that is no longer valid and to release resources by sending the EASDF instance selection information from new V-SMF to the old V-SMF. The disclosure herein may enable more efficient DNS traffic handling by sharing new EASDF instance selection information between a serving network (e.g., a serving SMF) and a home network (e.g., a home SMF) in scenarios other than those based on the Session Breakout connectivity model.

### 2. Second disclosure: Method for managing DNS context between SMFs following SMF insertion/change/removal

In the procedure described in the first disclosure. The new (target) V-SMF selected as a result of the V-SMF change may reuse the set DNS context and the existing V-EASDF instance previously selected from the source V-SMF.

Prior to the V-SMF change, the existing V-EASDF previously reported to the source V-SMF about the receipt of DNS messages. With the V-SMF change, the report destination of the existing V-EASDF shall be changed from the source V-SMF to the target V-SMF. A method to change the report target from the source V-SMF to the target V-SMF is required.

A method to send information about the new V-EASDF selection from the (target) V-SMF to the (source) V-SMF is required.

If the (target) V-SMF reuses an existing V-EASDF, there is a need for a way for the (target) V-SMF to transmit information about changing the Notification Endpoint to the (source) V-SMF.

According to disclosure of the present specification, through extended Neasdf_DNSContext_Update and Nsmf_PDUSession _StatusNotify service operations, a new (target) V-SMF may send new V-EASDF selection information or newly assigned Notification Endpoint information to the (source) V-SMF.

In addition, this specification may allow the (target) V-SMF to receive the Neasdf_DNSContext_Notify service upon receipt of DNS messages from the existing V-EASDF if the (target) V-SMF reuses the existing V-EASDF.

### (1) Neasdf_DNSContext_Update Service Operation

The Neasdf_DNSContext_Update service operation may update the DNS context of the EASDF. Alternatively, the Neasdf_DNSContext_Update service operation may instruct the EASDF to forward the DNS Response to the UE.

The Neasdf_DNSContext_Update service operation may be required to include the DNS Context ID of the EASDF. That is, the target V-SMF may include information specifying the DNS context and the Notification Endpoint information within that DNS context in a Neasdf_DNSContext_Update request message. And, the target V-SMF may send the Neasdf_DNSContext_Update request message to the Old V-EASDF. The Old V-EASDF may then update the configuration information and reply to the target V-SMF with a Result Indication indicating whether the update was successful or not.

The Neasdf_DNSContext_Update service operation may optionally include a Notification Endpoint. In addition, the Neasdf_DNSContext_Update service operation may optionally include updated DNS message handling rules.

When the EASDF receives a DNS message, the target SMF that the EASDF should report on the reception of DNS message may be changed. The target V-SMF may extend the Neasdf_DNSContext_Update service(request) and include information requesting that the Notification Endpoint, the reporting target SMF, change to the target V-SMF in it.

In an Intra/Inter PLMN handover procedure involving a V-SMF change in a roaming scenario, the new (target) V-SMF may provide a V-EASDF instance with the Notification Endpoints to be updated via the old V-SMF or directly. Reuse of an existing V-EASDF in a V-SMF change may be supported.

The aforementioned Neasdf service extensions allow an NF consumer (specifically SMF) to instruct an NF producer (specifically EASDF) to change target of the Notification reporting.

### (2) Nsmf_PDUSession_SMContextStatusNotify service operation

Nsmf_PDUSession_SMContextStatusNotify service operation maybe used by the SMF to notify its consumers about the status of an SM context related to a PDU Session (e.g. PDU Session Release due to local reasons within the SMF, PDU Session handover to a different system or access type, SMF context transfer, triggering I-SMF selection for the PDU Session). The SMF may use this service operation to update the SMF derived CN assisted RAN parameters tuning in the AMF. The SMF may report the DDN Failure with NEF Correlation ID to the AMF

Nsmf_PDUSession_SMContextStatusNotify service operation may be required to include Status information.

Nsmf_PDUSession_SMContextStatusNotify service operation may optionally be required to include the following:
- Cause
- SMF derived CN assisted RAN parameters tuning
- New SMF ID for SM Context Transfer or SMF set ID
- Small Data Rate Control Status
- APN Rate Control Status
- DDN Failure detected in (I-/V-)SMF
- target DNAI information
- list of NWDAF IDs and corresponding Analytics ID(s)
- EASDF Re-selection Indication
- EASDF Notification Endpoint.

The target DNAI information may indicate the target DNAI for the current PDU session or the target DNAI for the next PDU session.

Nsmf_PDUSession_SMContextStatusNotify may be used to notify SMFs of the selection/use of a new EASDF. For example, by including an EASDF Re-selection Indication, the SMF (e.g., a source V-SMF) may be informed indication via that it has decided to reuse an EASDF. Upon receiving this, the SMF may determine if it should maintain the DNS Context in the existing EASDF and, if it no longer needs to, perform the Neasdf_DNSContext_Delete service to delete the DNS Context.

Nsmf_PDUSession_SMContextStatusNotify may be used to request changes to Notification Endpoints in EASDF. For example, an SMF (e.g., a target V-SMF) that wants to receive notifications from an EASDF may assign a Notification Endpoint and include it in the Nsmf_PDUSession_SMContextStatusNotify and send it to the SMF (e.g., a source V-SMF) that selects the EASDF. In addition, an SMF (e.g., target V-SMF) that wants to receive notifications from an EASDF may send an Incitation indicating a Notification Endpoint update request to the SMF (e.g., source V-SMF) that selected the EASDF. Receiving it, the SMF (e.g., the source V-SMF) may perform operation to update the Notification Endpoint with the EASDF.

With the above Nsmf service extension, the NF consumer (especially the target V-SMF) may inform the NF producer (especially the target V-SMF) whether to select a new V-EASDF or not, and may also send the Notification Endpoint information for changing the reporting target of the EASDF (especially the V-EASDF).

Based on the information received, the source V-SMF may decide whether to continue using the previously selected V-EASDF and DNS contexts and whether to delete/dispose of them.

For reuse of the EASDF instance, the target V-SMF may send the Notification Endpoint information for changing the reporting target of the V-EASDF.

The contents of this specification may also be utilized for EASDF reuse in handover procedures involving V-SMF changes or in scenarios where an intermediate SMF is selected.

The way in which this specification provides information about the selection of a new V-EASDF from a new (target) V-SMF to an old V-SMF, and the way in which it updates the Notification Endpoint information in the existing V-EASDF to change the V-SMF to which it reports based on V-EASDF reuse, may be accomplished by extending existing service operations or creating new service operations, or it may be sent by reusing existing parameters or creating new indications.

This specification specifies that in order to support EAS Rediscovery due to Intra/Inter PLMN handover in roaming scenarios, the new (target) V-SMF selected by SMF change within the standard service procedure may send, to the old V-SMF, information about the selection of a new V-EASDF, so that the old V-SMF can make a determination that the existing old V-EASDF and DNS context are no longer valid and perform resource release.

If the new (target) V-SMF decides to reuse the old V-EASDF, a method to change the target V-SMF to which the old V-EASDF reports is proposed in the present specification. Then the EAS (Re-)discovery process may be supported without a separate process of deleting the old DNS context and selecting a new V-EASDF and establishing a DNS context.

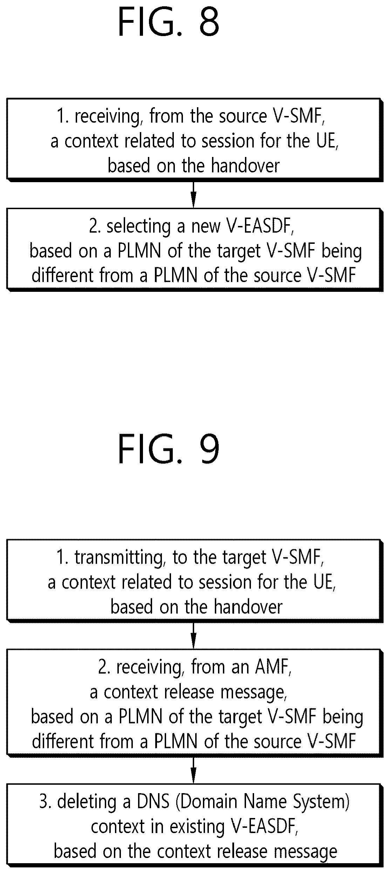

**FIG. 8** **shows the procedure of the target V-SMF according to disclosure of the present specification.**

A handover of a V-SMF for a UE (User Equipment) may be performed from a source V-SMF to the target V-SMF.
1. The target V-SMF may receive, from the source V-SMF, a context related to session for the UE.
2. The target V-SMF may receive, from the source V-SMF, a context related to session for the UE, based on the handover.
3. The target V-SMF may select a new V-EASDF (V-Edge Application Server Discovery Function), based on a PLMN (Public Land Mobile Network selection) of the target V-SMF being different from a PLMN of the source V-SMF.

The target V-SMF may transmit, to a H-SMF (Home Session Management Function), a session update message.

The session update message may include EAS re-discovery indication and impact field.

The session update message may include address of the new V-EASDF, based on selecting the new V-EASDF.

The target V-SMF may transmit, to the UE, a PDU session modification command,

The PDU session modification command may include EAS re-discovery indication and impact field.

The PDU session modification command may include address of the new V-EASDF, based on selecting the new V-EASDF.

**FIG. 9** **shows the procedure of the source V-SMF according to disclosure of the present specification.**

A handover of a V-SMF for a UE (User Equipment) may be performed from the source V-SMF to a target V-SMF.
1. The source V-SMF may transmit, to the target V-SMF, a context related to session for the UE, based on the handover.
2. The source V-SMF may receive, from an AMF (Access and Mobility management Function), a context release message, based on a PLMN (Public Land Mobile Network selection) of the target V-SMF being different from a PLMN of the source V-SMF.
3. The source V-SMF may delete a DNS (Domain Name System) context in existing V-EASDF, based on the context release message.

Hereinafter, an apparatus for performing communication according to some embodiments of the present specification will be described.

For example, a target V-SMF may include a processor, a transceiver, and a memory.

For example, a processor may be configured to be operably coupled with a memory and a processor.

The processor may perform: wherein a handover of a V-SMF for a UE (User Equipment) is performed from a source V-SMF to the target V-SMF, receiving, from the source V-SMF, a context related to session for the UE, based on the handover; selecting a new V-EASDF (V-Edge Application Server Discovery Function), based on a PLMN (Public Land Mobile Network selection) of the target V-SMF being different from a PLMN of the source V-SMF.

Hereinafter, a processor for providing communication according to some embodiments of the present specification will be described.

The processor is configured to: wherein a handover of a V-SMF for a UE (User Equipment) is performed from a source V-SMF to the target V-SMF, receiving, from the source V-SMF, a context related to session for the UE, based on the handover; selecting a new V-EASDF (V-Edge Application Server Discovery Function), based on a PLMN (Public Land Mobile Network selection) of the target V-SMF being different from a PLMN of the source V-SMF.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: wherein a handover of a V-SMF for a UE (User Equipment) is performed from a source V-SMF to the target V-SMF, receiving, from the source V-SMF, a context related to session for the UE, based on the handover; selecting a new V-EASDF (V-Edge Application Server Discovery Function), based on a PLMN (Public Land Mobile Network selection) of the target V-SMF being different from a PLMN of the source V-SMF.

The present specification may have various effects.

For example, in a roaming scenario, if a V-SMF changes and the changed V-SMF decides to select a new EASDF, the changed V-SMF can notify the old V-SMF, and the context of the existing EASDF can be deleted.

For example, in a roaming scenario, if a V-SMF is changed, but the changed V-SMF decides to reuse an existing EASDF, the existing EASDF can be reused as the changed V-SMF updates the context of the EASDF.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a target V-SMF (Visited Session Management Function), comprising:
wherein a handover of a V-SMF for a UE (User Equipment) is performed from a source V-SMF to the target V-SMF,
receiving, from the source V-SMF, a context related to session for the UE, based on the handover;
selecting a new V-EASDF (V-Edge Application Server Discovery Function), based on a PLMN (Public Land Mobile Network selection) of the target V-SMF being different from a PLMN of the source V-SMF.

2. The method of claim 1, further comprising:
transmitting, to a H-SMF (Home Session Management Function), a session update message,
wherein the session update message includes EAS re-discovery indication and impact field,
wherein the session update message includes address of the new V-EASDF, based on selecting the new V-EASDF.

3. The method of claim 1 or claim 2, further comprising:
transmitting, to the UE, a PDU session modification command,
wherein the PDU session modification command includes EAS re-discovery indication and impact field,
wherein the PDU session modification command includes address of the new V-EASDF, based on selecting the new V-EASDF.

4. A target V-SMF (Visited Session Management Function), to perform communication, comprising:
a transceiver; and
a processor,
wherein the processor performs operation comprising:
wherein a handover of a V-SMF for a UE (User Equipment) is performed from a source V-SMF to the target V-SMF,
receiving, from the source V-SMF, a context related to session for the UE, based on the handover;
selecting a new V-EASDF (V-Edge Application Server Discovery Function), based on a PLMN (Public Land Mobile Network selection) of the target V-SMF being different from a PLMN of the source V-SMF.

5. The target V-SMF of claim 4, wherein the operation is further comprising:
transmitting, to a H-SMF (Home Session Management Function), a session update message,
wherein the session update message includes EAS re-discovery indication and impact field,
wherein the session update message includes address of the new V-EASDF, based on selecting the new V-EASDF.

6. The target V-SMF of claim 4 or claim 5, wherein the operation is further comprising:
transmitting, to the UE, a PDU session modification command,
wherein the PDU session modification command includes EAS re-discovery indication and impact field,
wherein the PDU session modification command includes address of the new V-EASDF, based on selecting the new V-EASDF.

7. A method for performing communication, performed by a source V-SMF (Visited Session Management Function), comprising:
wherein a handover of a V-SMF for a UE (User Equipment) is performed from the source V-SMF to a target V-SMF,
transmitting, to the target V-SMF, a context related to session for the UE, based on the handover;
receiving, from an AMF (Access and Mobility management Function), a context release message, based on a PLMN (Public Land Mobile Network selection) of the target V-SMF being different from a PLMN of the source V-SMF;
deleting a DNS (Domain Name System) context in existing V-EASDF, based on the context release message.

8. A source V-SMF (Visited Session Management Function), to perform communication, comprising:
a transceiver; and
a processor,
wherein the processor performs operation comprising:
wherein a handover of a V-SMF for a UE (User Equipment) is performed from the source V-SMF to a target V-SMF,
transmitting, to the target V-SMF, a context related to session for the UE, based on the handover;
receiving, from an AMF (Access and Mobility management Function), a context release message, based on a PLMN (Public Land Mobile Network selection) of the target V-SMF being different from a PLMN of the source V-SMF;
deleting a DNS (Domain Name System) context in existing V-EASDF, based on the context release message.

9. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claim 1 to the claim 3.

10. A non-volatile computer readable storage medium having recorded instructions, wherein the instructions, based on being executed by one or more processors, cause the one or more processors to perform operation that is a method of one of the claim 1 to the claim 3.
